# EUROPÄISCHE PATENTSCHRIFT

(11) **EP 4 416 000 B1**
(45) Veröffentlichungstag und Bekanntmachung des Hinweises auf die Patenterteilung: **12.08.2026**
(21) Anmeldenummer: 22789916.8
(22) Anmeldetag: 23.09.2022
(51) Int. Cl.: B60K 15/035, F02M 25/08

(54) **VERFAHREN ZUR ÜBERPRÜFUNG EINES TANKSYSTEMS EINES FAHRZEUGS MIT VERBRENNUNGSKRAFTMASCHINE, INSBESONDERE EINES MOTORRADS, UND MOTORRAD**
METHOD FOR CHECKING A TANK SYSTEM OF A VEHICLE HAVING AN INTERNAL COMBUSTION ENGINE, MORE PARTICULARLY OF A MOTORCYCLE, AND MOTORCYCLE
PROCÉDÉ DE VÉRIFICATION D'UN SYSTÈME DE RÉSERVOIR D'UN VÉHICULE COMPORTANT UN MOTEUR À COMBUSTION INTERNE, PLUS PARTICULIÈREMENT D'UNE MOTOCYCLETTE, ET MOTOCYCLETTE

(30) Priorität: 14.10.2021 DE 102021126600
(43) Veröffentlichungstag der Anmeldung: 21.08.2024
(73) Patentinhaber: Bayerische Motoren Werke Aktiengesellschaft, 80809 München (DE)
(72) Erfinder: KIESEWETTER-MICHLER, Rolf, 85386 Eching (DE); PROBST, Michael, 85356 Freising (DE)
(86) Internationale Anmeldenummer: PCT/EP2022/076484
(87) Internationale Veröffentlichungsnummer: WO 2023/061725

(56) Entgegenhaltungen:
- DE-A1- 102009 036 265
- DE-A1- 19 536 646
- DE-A1- 4 003 751
- US-A1- 2010 078 241
- US-A1- 2020 198 717

## Beschreibung

Die Erfindung betrifft ein Verfahren zur Überprüfung eines Tanksystems eines Fahrzeugs mit Verbrennungskraftmaschine, insbesondere eines Motorrads, sowie ein Motorrad.

Untersuchungen der kalifornischen Umweltbehörde CARB haben ergeben, dass ein erheblicher Anteil der von Motorrädern während der Fahrt verursachten Emissionen organischer Verbindungen in undichten oder fehlerhaften Tanksystemen begründet ist.

Der Kraftstofftank eines mit einer Verbrennungskraftmaschine betriebenen Fahrzeugs ist mit der Umgebung verbunden, um Druckunterschiede ausgleichen zu können, die beispielsweise beim Betanken, beim Verbrauch von Kraftstoff oder aufgrund von Temperaturschwankungen entstehen. Dabei muss ein Luftaustausch in beide Richtungen möglich sein. Hierzu sind in einer weitverbreiteten Anwendung ein Tankentlüftungsventil, das mit einer Luftzufuhrleitung der Verbrennungskraftmaschine verbunden ist, sowie eine Frischluftzufuhr zum Tank vorgesehen. Um zu verhindern, dass Kraftstoff unverbrannt in die Umgebung gelangt, ist in der Frischluftleitung meist ein Aktivkohlefilter angeordnet, der den gasförmig in der ausströmenden Luft enthaltenen Kraftstoff aufnimmt und zwischenspeichert. Dementsprechend muss dieser Aktivkohlefilter regelmäßig regeneriert werden. Hierzu wird das Tankentlüftungsventil kontrolliert geöffnet und der Kraftstoff aus dem Aktivkohlefilter der Luftzufuhrleitung und somit der Verbrennungskraftmaschine zugeführt.

Im Pkw-Bereich sind Tanküberprüfungssysteme, die die ordnungsgemäße Funktion des Tankentlüftungsventils sowie die Dichtigkeit des Gesamtsystems kontrollieren, bereits Standard.

Die gattungsgemäße DE 40 03 751 A1 zeigt ein Tankentlüftungsventil für ein Kraftfahrzeug, bei dem eine Belüftungsleitung eines Absorptionsfilters gesteuert absperrbar ist und zu Diagnosezwecken ein Unterdruck im Tank gemessen wird.

Die DE 195 36 646 A1 und die DE 10 2009 036265 A1 zeigen weitere Diagnosesysteme für Tankentlüftungen.

In der US 2020/198717 A1 und der US 2010/078241 A1 sind Tanksystem für Motorräder beschrieben.

Eine Angleichung der Anforderungen an diesen Standard ist auch für Motorräder geplant.

Aufgabe der Erfindung ist es, die Überprüfung eines Tanksystems auf einfache und kostengünstige Weise zu ermöglichen.

Diese Aufgabe wird mit einem Verfahren zur Überprüfung eines Tanksystems eines Fahrzeugs mit Verbrennungskraftmaschine gelöst, wobei das Tanksystem einen Kraftstofftank, ein Tankentlüftungsventil, einen im Strömungsweg zwischen dem Kraftstofftank und dem Tankentlüftungsventil angeordneten Filter sowie eine Saugleitung umfasst, die vom Tankentlüftungsventil zu einer Verbrennungskraftmaschine führt. Das Tankentlüftungsventil wird jeweils für einen vorgegebenen Winkelbereich eines Rotationswinkels einer Kurbelwelle der Verbrennungskraftmaschine während eines Ansaugtaktes eines Zylinders der Verbrennungskraftmaschine geöffnet, über mehrere Ansaugtakte, wobei Fluid über den Filter aus dem Kraftstofftank in die Saugleitung angesaugt wird. Ein Druck stromaufwärts des Tankentlüftungsventils wird gemessen, um Druckwerte zu ermitteln, und die Druckwerte werden ausgewertet.

Während des Ansaugtaktes entsteht in der Luftzufuhrleitung ein Unterdruck. Da die Luftzufuhrleitung in Strömungsverbindung mit der Saugleitung steht, bildet sich auch ein Unterdruck am Tankentlüftungsventil aus. Wenn das Tankentlüftungsventil geöffnet wird, wird daher Fluid über den Filter aus dem Kraftstofftank in die Saugleitung angesaugt.

Die winkelbasierte Ansteuerung der Öffnung des Tankentlüftungsventils führt zu einer definiert erwartbaren Druckänderung, die auch bei kurzen Öffnungszeiten des Tankentlüftungsventils gut auswertbar ist. Somit lässt sich der Einfluss der Öffnungszeiten des Tankentlüftungsventils auf den Motorlauf sehr gering halten.

Das Öffnen des Tankentlüftungsventils wird beispielsweise über 5 bis 25 Ansaugtakte, insbesondere etwa 10 Ansaugtakte, durchgeführt. Es hat sich herausgestellt, dass sich so aussagekräftige Druckwerte bei minimalem Einfluss auf den Motorlauf erhalten lassen.

Das Tankentlüftungsventil wird beispielsweise über einen Prozentsatz von 10 % bis 50 %, insbesondere 15 % bis 30 % des Ansaugtakts geöffnet.

Die Lage des Winkelbereichs innerhalb des Ansaugtakts ist frei wählbar, sodass unterschiedliche Betriebspunkte, die unterschiedlichen erwarteten Unterdruckwerten zugeordnet sind, verwendbar sind. So ist es möglich, einen betriebspunktabhängig definierten Saugleitungsunterdruck abzugreifen, und den erwarteten Unterdruck in einem gewissen Bereich variabel einzustellen. Der vorgegebene Winkelbereich kann also bezüglich des Betrags und des Beginns der Öffnung des Tankentlüftungsventils in Abhängigkeit von einem Betriebspunkt der Verbrennungskraftmaschine gewählt werden.

Es ist bevorzugt möglich, das Tanksystem gezielt gegen den Umgebungsdruck abzusperren, um die Druckbeaufschlagung definiert steuern zu können. Hierzu wird beispielsweise ein Absperrventil, durch das Frischluft zum Filter gelangt, geschlossen, während das Tankentlüftungsventil geöffnet ist. Das Absperrventil kann während des gesamten Überprüfungsverfahrens geschlossen bleiben.

Aus den ermittelten Druckwerten lässt sich beispielsweise auf das Vorliegen eines Lecks im Tanksystem schließen, beispielsweise, wenn der erreichte maximale Unterdruck geringer als erwartet ist.

Aus den ermittelten Druckwerten kann auch auf eine Fehlfunktion des Tankentlüftungsventils geschlossen werden, beispielsweise wenn die Druckschwankungen über mehrere Ansaugtakte schwächer oder stärker ausfallen als erwartet.

Vorzugsweise ist ein Drucksensor zwischen dem Tank und dem Filter positioniert, mit dem die Druckwerte ermittelt werden. Der Druck wird dann stromaufwärts des Filters gemessen.

Die Einleitung des angesaugten Fluids in die Luftzufuhrleitung zur Verbrennungskraftmaschine erfolgt vorzugsweise stromabwärts einer Drosselklappe und umgeht daher die Drosselklappe. Die Stellung der Drosselklappe hat somit keinen unmittelbaren Einfluss auf die ermittelten Druckwerte, auch wenn die Drosselklappe den Betriebspunkt vorgibt und somit indirekt eine Rückwirkung auf die Ansteuerung hat.

Bevorzugt wird das angesaugte Fluid stets einem einzigen Zylinder der Verbrennungskraftmaschine oder einem Zwei-Zylinder-Boxermotor zugeführt. Auf diese Weise werden die ermittelten Druckwerte nicht durch die Bewegung anderer Zylinder der Verbrennungskraftmaschine in einem phasenverschobenen Takt beeinflusst.

Die Erfindung betrifft auch ein Motorrad mit den Merkmalen des Anspruchs 10 und dementsprechend mit einem Tanksystem, das dazu ausgelegt ist, ein oben beschriebenes Verfahren auszuführen.

Die Erfindung lässt sich einfach auf sämtliche Verbrennungskraftmaschinen mit nur einem Zylinder oder in Form eines Boxermotors übertragen.

Bei der Zufuhr des angesaugten Fluids in einen einzigen Zylinder der Verbrennungskraftmaschine, in dessen Ansaugtakt der Winkelbereich für die Öffnung des Tankentlüftungsventils liegt und der für die Erzeugung des Unterdrucks in der Saugleitung genutzt wird, ist das Verfahren jedoch prinzipiell für alle Verbrennungskraftmaschinen geeignet.

Da das Tankentlüftungsventil für einen vorgegebenen Winkelbereich des Rotationswinkels der Kurbelwelle geöffnet wird und somit der zu erwartende Unterdruck bekannt ist, ist eine sehr genaue Auswertung der ermittelten Druckwerte trotz kurzer Öffnungszeiten des Tankentlüftungsventils möglich.

Die Erfindung wird nachfolgend anhand eines Ausführungsbeispiels mit Bezug auf die beigefügten Figuren näher beschrieben. In den Zeichnungen zeigen:
- Figur 1 eine schematische Darstellung eines Tanksystems eines erfindungsgemäßen Motorrads zur Durchführung eines erfindungsgemäßen Verfahrens; und
- Figur 2 eine schematische Darstellung einer winkelbasierten Ansteuerung eines Tankentlüftungsventils des Tanksystems aus Figur 1.

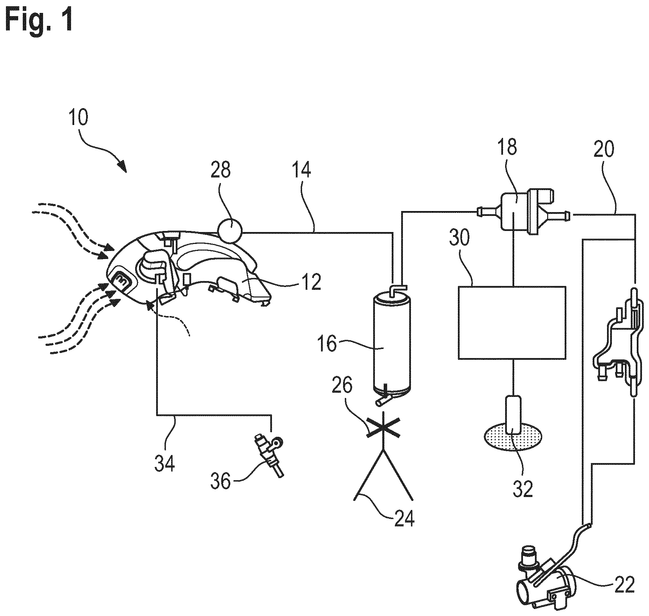

Figur 1 zeigt ein Tanksystem 10 einer (nicht dargestellten) Verbrennungskraftmaschine eines nicht näher dargestellten Motorrads.

Die Erfindung ist grundsätzlich auf Fahrzeuge mit Verbrennungskraftmaschine und Tanksystem anwendbar. Besonders bevorzugt wird sie bei einem Motorrad verwendet. Daher wird sie nachfolgend anhand eines Motorrads erläutert.

Ein Motorrad im Sinne dieser Anmeldung bezeichnet sämtliche mit einem Verbrennungsmotor betriebene Einspurfahrzeuge, also sowohl typische Motorräder und Motorroller als auch beispielsweise dreirädrige Fahrzeugtypen.

Das Tanksystem 10 umfasst einen Kraftstofftank 12 (der verwendete Kraftstoff ist hier benzinbasiert und für Ottomotoren geeignet). Der Kraftstofftank 12 steht über Leitungen 14 mit einem Filter 16, hier einem Aktivkohlefilter, und stromabwärts des Filters 16 mit einem Tankentlüftungsventil 18 in Strömungsverbindung.

Vom Tankentlüftungsventil 18 führt eine Saugleitung 20 zu einer Drosselklappe 22 in einer nicht näher dargestellten Luftzufuhrleitung der Verbrennungskraftmaschine, wobei die Saugleitung 20 stromaufwärts der Drosselklappe 22 in die Luftzufuhrleitung mündet.

Die Saugleitung 20 ist so angeordnet, dass das darin strömende angesaugte Fluid stets einem einzigen, festgelegten Zylinder der Verbrennungskraftmaschine zugeführt wird.

Der Filter 16 ist mit einer Frischluftleitung 24 verbunden, in der ein Absperrventil 26 angeordnet ist, das die Zufuhr von Frischluft zum Filter 16 und das Abströmen von Luft aus dem Filter 16 in die Umgebung unterbinden kann.

Außerdem umfasst das Tanksystem 10 einen Drucksensor 28, der im Kraftstofftank 12 oder in der Leitung 14, hier zwischen Filter 16 und Kraftstofftank 12, angeordnet ist.

Das Tankentlüftungsventil 18 ist mit einer Steuereinheit 30 verbunden. Die Steuereinheit 30 steht auch mit sämtlichen anderen Komponenten des Tanksystems 10, insbesondere dem Drucksensor 28, sowie anderen Fahrzeugkomponenten in Verbindung. Hierzu gehört beispielsweise auch eine Lambdasonde 32 in einem (nicht dargestellten) Abgassystem der Verbrennungskraftmaschine.

Über eine Kraftstoffzufuhrleitung 34 ist der Kraftstofftank 12 mit einem oder mehreren Einspritzventilen 36 des oder der (nicht dargestellten) Zylinder(s) der Verbrennungskraftmaschine verbunden.

Die Verbrennungskraftmaschine ist hier ein Einzylindermotor oder ein Boxermotor, insbesondere ein Zweizylinder-Boxermotor.

Im normalen Betrieb der Verbrennungskraftmaschine ändert sich der Druck im Kraftstofftank 12 durch die Entnahme von Kraftstoff über die Kraftstoffzufuhrleitung 34 und das Einspritzventil 36, über das Nachfüllen von Kraftstoff in den Kraftstofftank 12 und über Temperaturänderungen. Dabei kann es sowohl zu einem Unterdruck als zu auch einen Überdruck gegenüber der Umgebung kommen. Das Absperrventil 26 in der Frischluftleitung 24 ist im Normalzustand geöffnet, sodass Frischluft in den Kraftstofftank 12 einströmen oder Luft aus dem Kraftstofftank 12 entweichen kann. Bei einem Überdruck im Kraftstofftank 12 werden die enthaltenen gasförmigen Kraftstoffbestandteile im Filter 16 zurückgehalten, sodass nur Luft aus der Frischluftleitung 24 abströmt.

Der Filter 16 wird regelmäßig regeneriert. Hierzu wird das Tankentlüftungsventil 18 auf von der Steuereinheit 30 vorgegebene Weise geöffnet, und der Filter 16 wird mit Frischluft gespült. Das so entstehende Fluid, ein Kraftstoff-Luft-Gemisch, wird über die Saugleitung 20 der Verbrennungskraftmaschine zugeführt.

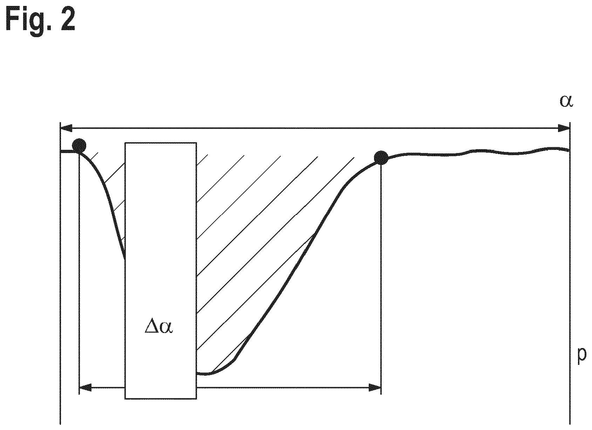

Wenn ein Diagnoseverfahren zur Überprüfung des Tanksystems 10 durchgeführt wird, bei dem das Tanksystem 10 auf Lecks und/oder auf eine ordnungsgemäße Funktion des Tankentlüftungsventils 18 überprüft wird, wird das Tankentlüftungsventil 18 kurzfristig nach einem vorgegebenen Schema geöffnet. Dies ist in Figur 2 verdeutlicht.

Das dargestellte Diagramm zeigt einen Unterdruck p in der Saugleitung 20, aufgetragen über den Rotationswinkel α einer Kurbelwelle, die von der Verbrennungskraftmaschine angetrieben wird. Dargestellt ist der Ansaugtakt des Zylinders, der mit der Saugleitung 20 verbunden ist. Während des Ansaugtaktes entsteht ein definierter, bekannter, winkelabhängiger Unterdruck p. Ein zur Durchführung des Verfahrens prinzipiell nutzbarer Winkelbereich ist durch die Schraffur verdeutlicht.

Dieser bekannte Zusammenhang wird verwendet, um einen vorgegebenen Winkelbereich Δα festzulegen, während dem das Tankentlüftungsventil 18 durch die Steuereinheit 30 gesteuert geöffnet wird. Der Winkelbereich Δα kann innerhalb des nutzbaren Winkelbereichs beliebig gelegt werden, sodass verschiedene Betriebspunkte ausgenutzt werden können, die unterschiedliche Unterdruckwerte liefern. Auch der Betrag des Winkelbereichs Δα ist nach Belieben wählbar, wobei er 720° nicht überschreitet, also das Tankentlüftungsventil 18 zumindest einmal alle 720° geschlossen wird. Der Beginn des vorgegebenen Winkelbereichs Δα, also der Startwinkel α, bei dem das Tankentlüftungsventil 18 geöffnet wird, und der Betrag des Winkelbereichs Δα, also die Winkeldifferenz zwischen den Winkeln, an denen das Tankentlüftungsventil 18 geöffnet und wieder geschlossen wird, können daher im Ermessen des Fachmanns frei innerhalb des nutzbaren Winkelbereichs gewählt werden.

Das Tankentlüftungsventil 18 kann beispielsweise über einen Prozentsatz von etwa 10 % bis 50 %, insbesondere von etwa 15 % bis 30 %, des Ansaugtakts geöffnet sein, was einem Betrag des Winkelbereichs Δα von ca. 20° - 90° bzw. ca. 30° - 55° entspricht. Der Beginn des Winkelbereichs Δα ist vom Fachmann auf einen beliebigen, geeigneten Winkel α im Ansaugtakt zu legen.

Das Tankentlüftungsventil 18 wird über mehrere Ansaugtakte, beispielsweise 5 bis 25 Ansaugtakte, geöffnet, vorzugsweise jeweils über denselben Winkelbereich Δα.

Gleichzeitig mit der Öffnung des Tankentlüftungsventils 18 wird das Absperrventil 26 in der Frischluftleitung 24 geschlossen, sodass keine Umgebungsluft in den Kraftstofftank 12 eingesaugt werden kann.

Während das Tankentlüftungsventil 18 geöffnet ist, wird mit dem Drucksensor 28 der Druckverlauf gemessen und Druckwerte ermittelt, die zur Auswertung herangezogen werden.

Die Auswertung kann in der Steuereinheit 30 erfolgen.

Beispielsweise kann auf das Vorliegen eines Lecks geschlossen werden, wenn der Druck nicht so weit wie erwartet absinkt, oder auf eine Fehlfunktion des Tankentlüftungsventils 18, wenn über mehrere Ansaugtakte die Druckschwankung geringer ausfällt als erwartet. Auch beliebige andere geeignete Auswertungen können natürlich durchgeführt werden.

Da der eindeutige Zusammenhang zwischen den Druckwerten und dem Betriebspunkt des Zylinders, der für die Erzeugung des Unterdrucks verantwortlich ist, stets bekannt ist, ist auch mit kleinen Winkelbereichen Δα, die kurzen Öffnungszeiten des Tankentlüftungsventils 18 entsprechen, eine genaue Diagnose möglich.

## Patentansprüche

1. Verfahren zur Überprüfung eines Tanksystems (10) eines Fahrzeugs mit Verbrennungskraftmaschine, insbesondere eines Motorrads, wobei das Tanksystem (10) einen Kraftstofftank (12), ein Tankentlüftungsventil (18), einen im Strömungsweg zwischen dem Kraftstofftank (12) und dem Tankentlüftungsventil (18) angeordneten Filter (16) sowie eine Saugleitung (20) umfasst, die vom Tankentlüftungsventil (18) zu einer Verbrennungskraftmaschine führt, **gekennzeichnet durch** die Schritten:
- Öffnen des Tankentlüftungsventils (18) jeweils für einen vorgegebenen Winkelbereich (Δα) eines Rotationswinkels (α) einer Kurbelwelle der Verbrennungskraftmaschine während eines Ansaugtaktes eines Zylinders der Verbrennungskraftmaschine, über mehrere Ansaugtakte, wobei Fluid über den Filter (16) aus dem Kraftstofftank (12) in die Saugleitung (20) angesaugt wird,
- Messen eines Drucks stromaufwärts des Tankentlüftungsventils (18), um Druckwerte zu ermitteln, und
- Auswerten der Druckwerte.

2. Verfahren nach Anspruch 1, wobei das Öffnen des Tankentlüftungsventils (18) über 5 bis 25 Ansaugtakte durchgeführt wird.

3. Verfahren nach einem der vorhergehenden Ansprüche, wobei das Tankentlüftungsventil (18) über einen Prozentsatz von 10 % bis 50 %, insbesondere 15 % bis 30 % des Ansaugtakts geöffnet wird.

4. Verfahren nach einem der vorhergehenden Ansprüche, wobei der vorgegebene Winkelbereich (Δα) in Betrag und Beginn der Öffnung des Tankentlüftungsventils (18) in Abhängigkeit von einem Betriebspunkt der Verbrennungskraftmaschine gewählt wird.

5. Verfahren nach einem der vorhergehenden Ansprüche, wobei ein Absperrventil (26), durch das Frischluft zum Filter (16) gelangt, geschlossen wird, während das Tankentlüftungsventil (18) geöffnet ist.

6. Verfahren nach einem der vorhergehenden Ansprüche, wobei aus den Druckwerten auf das Vorliegen eines Lecks im Tanksystem (10) geschlossen wird.

7. Verfahren nach einem der vorhergehenden Ansprüche, wobei aus den Druckwerten auf eine Fehlfunktion des Tankentlüftungsventils (18) geschlossen wird.

8. Verfahren nach einem der vorhergehenden Ansprüche, wobei das angesaugte Fluid stromabwärts einer Drosselklappe (22) in eine zur Verbrennungskraftmaschine führende Luftzuführleitung eingespeist wird.

9. Verfahren nach einem der vorhergehenden Ansprüche, wobei das angesaugte Fluid stets einem einzigen Zylinder der Verbrennungskraftmaschine oder einem Zweizylinder-Boxermotor zugeführt wird.

10. Motorrad mit einem Tanksystem (10), wobei das Tanksystem (10) dazu ausgelegt ist, ein Verfahren nach einem der vorhergehenden Ansprüche auszuführen und einen Kraftstofftank (12), ein Tankentlüftungsventil (18), einen im Strömungsweg zwischen dem Kraftstofftank (12) und dem Tankentlüftungsventil (18) angeordneten Filter (16), eine Saugleitung (20), die vom Tankentlüftungsventil (18) zu einer Verbrennungskraftmaschine des Motorrads führt und ein Absperrventil (26), das die Zufuhr von Frischluft zum Filter (16) unterbinden kann, und eine Steuereinheit (30) umfasst, wobei das Tankentlüftungsventil (18) in dem vorgegebenen Winkelbereich (Δα) des Rotationswinkels (α) der Kurbelwelle durch die Steuereinheit (30) gesteuert geöffnet wird, und wobei die Verbrennungskraftmaschine ein Einzylindermotor oder ein Zweizylinder-Boxermotor ist.

## Claims

1. Method for checking a tank system (10) of a vehicle with an internal combustion engine, in particular a motorcycle, wherein the tank system (10) comprises a fuel tank (12), a tank ventilation valve (18), a filter (16) arranged in the flow path between the fuel tank (12) and the tank ventilation valve (18), and a suction line (20) which leads from the tank ventilation valve (18) to an internal combustion engine, **characterized by** the steps:
• opening the tank ventilation valve (18) in each case for a predetermined angular range (Δα) of a rotation angle (α) of a crankshaft of the internal combustion engine during an intake stroke of a cylinder of the internal combustion engine, over several intake strokes, wherein fluid is sucked from the fuel tank (12) into the suction line (20) via the filter (16),
• measuring a pressure upstream of the tank ventilation valve (18) in order to determine pressure values, and
• evaluating the pressure values.

2. Method according to claim 1, wherein the opening of the tank ventilation valve (18) is carried out over 5 to 25 intake strokes.

3. Method according to one of the preceding claims, wherein the tank ventilation valve (18) is opened over a percentage of 10 % to 50 %, in particular 15 % to 30 % of the intake stroke.

4. Method according to one of the preceding claims, wherein the predetermined angular range (Δα) in magnitude and beginning of the opening of the tank ventilation valve (18) is selected in dependence on an operating point of the internal combustion engine.

5. Method according to one of the preceding claims, wherein a shut-off valve (26), through which fresh air reaches the filter (16), is closed while the tank ventilation valve (18) is open.

6. Method according to one of the preceding claims, wherein the presence of a leak in the tank system (10) is inferred from the pressure values.

7. Method according to one of the preceding claims, wherein a malfunction of the tank ventilation valve (18) is inferred from the pressure values.

8. Method according to one of the preceding claims, wherein the sucked fluid is fed downstream of a throttle valve (22) into an air supply line leading to the internal combustion engine.

9. Method according to one of the preceding claims, wherein the sucked fluid is always fed to a single cylinder of the internal combustion engine or to a two-cylinder boxer engine.

10. Motorcycle with a tank system (10), wherein the tank system (10) is designed to carry out a method according to one of the preceding claims and comprises a fuel tank (12), a tank ventilation valve (18), a filter (16) arranged in the flow path between the fuel tank (12) and the tank ventilation valve (18), a suction line (20) which leads from the tank ventilation valve (18) to an internal combustion engine of the motorcycle, and a shut-off valve (26) which can prevent the supply of fresh air to the filter (16), and a control unit (30), wherein the tank ventilation valve (18) is opened in a controlled manner by the control unit (30) in the predetermined angular range (Δα) of the rotation angle (α) of the crankshaft, and wherein the internal combustion engine is a single-cylinder engine or a two-cylinder boxer engine.

## Revendications

1. Procédé de vérification d'un système de réservoir (10) d'un véhicule à moteur à combustion interne, en particulier d'une motocyclette, le système de réservoir (10) comprenant un réservoir de carburant (12), une soupape de ventilation de réservoir (18), un filtre (16) disposé dans le trajet d'écoulement entre le réservoir de carburant (12) et la soupape de ventilation de réservoir (18), ainsi qu'une conduite d'aspiration (20) qui mène de la soupape de ventilation de réservoir (18) à un moteur à combustion interne, **caractérisé par** les étapes :
• ouverture de la soupape de ventilation de réservoir (18) respectivement pour une plage angulaire prédéterminée (Δα) d'un angle de rotation (α) d'un vilebrequin du moteur à combustion interne pendant une course d'admission d'un cylindre du moteur à combustion interne, sur plusieurs courses d'admission, du fluide étant aspiré du réservoir de carburant (12) dans la conduite d'aspiration (20) par l'intermédiaire du filtre (16),
• mesure d'une pression en amont de la soupape de ventilation de réservoir (18) afin de déterminer des valeurs de pression, et
• évaluation des valeurs de pression.

2. Procédé selon la revendication 1, l'ouverture de la soupape de ventilation de réservoir (18) étant effectuée sur 5 à 25 courses d'admission.

3. Procédé selon l'une des revendications précédentes, la soupape de ventilation de réservoir (18) étant ouverte sur un pourcentage de 10 % à 50 %, en particulier de 15 % à 30 % de la course d'admission.

4. Procédé selon l'une des revendications précédentes, la plage angulaire prédéterminée (Δα) en amplitude et en début de l'ouverture de la soupape de ventilation de réservoir (18) étant choisie en fonction d'un point de fonctionnement du moteur à combustion interne.

5. Procédé selon l'une des revendications précédentes, une soupape d'arrêt (26), par laquelle de l'air frais parvient au filtre (16), étant fermée pendant que la soupape de ventilation de réservoir (18) est ouverte.

6. Procédé selon l'une des revendications précédentes, la présence d'une fuite dans le système de réservoir (10) étant déduite des valeurs de pression.

7. Procédé selon l'une des revendications précédentes, un dysfonctionnement de la soupape de ventilation de réservoir (18) étant déduit des valeurs de pression.

8. Procédé selon l'une des revendications précédentes, le fluide aspiré étant introduit en aval d'un papillon des gaz (22) dans une conduite d'amenée d'air menant au moteur à combustion interne.

9. Procédé selon l'une des revendications précédentes, le fluide aspiré étant toujours amené à un cylindre unique du moteur à combustion interne ou à un moteur bicylindre à plat.

10. Motocyclette avec un système de réservoir (10), le système de réservoir (10) étant conçu pour exécuter un procédé selon l'une des revendications précédentes et comprenant un réservoir de carburant (12), une soupape de ventilation de réservoir (18), un filtre (16) disposé dans le trajet d'écoulement entre le réservoir de carburant (12) et la soupape de ventilation de réservoir (18), une conduite d'aspiration (20) qui mène de la soupape de ventilation de réservoir (18) à un moteur à combustion interne de la motocyclette, et une soupape d'arrêt (26) qui peut empêcher l'amenée d'air frais au filtre (16), et une unité de commande (30), la soupape de ventilation de réservoir (18) étant ouverte de manière commandée par l'unité de commande (30) dans la plage angulaire prédéterminée (Δα) de l'angle de rotation (α) du vilebrequin, et le moteur à combustion interne étant un moteur monocylindre ou un moteur bicylindre à plat.
